Europäisches Patentamt

European Patent Office

Office européen des brevets

(19)

(11) Veröffentlichungsnummer: **0 191 919**
**B1**

(12) # EUROPÄISCHE PATENTSCHRIFT

(45) Veröffentlichungstag der Patentschrift:
31.08.88

(51) Int. Cl.⁴: **E 21 D 15/44**

(21) Anmeldenummer: **85115330.4**

(22) Anmeldetag: **03.12.85**

(54) **Grubenstempel-Dichtungsanordnung.**

(30) Priorität: **20.02.85 DE 3505761**

(43) Veröffentlichungstag der Anmeldung:
**27.08.86 Patentblatt 86/35**

(45) Bekanntmachung des Hinweises auf die Patenterteilung:
**31.08.88 Patentblatt 88/35**

(84) Benannte Vertragsstaaten:
**AT BE FR IT**

(56) Entgegenhaltungen:
**DE-C-884 260**
**FR-A-2 324 955**
**GB-A-992 123**

**PDF Katalog "Präzisions-Dichtungen für den Bergbau", herausgegeben im April 1984 von der Anmelderin**

(73) Patentinhaber: **Parker- Prädifa GmbH, Arnold-Jäger- Strasse 1, D-7120 Bietigheim- Bissingen (DE)**

(72) Erfinder: **Kohlmorgen, Karl- Heinrich, Denkendorfstrasse 11, D-7124 Bönnigheim 3 (DE)**
Erfinder: **Naundorf, Peter, Dipl.- Ing., Elsterstrasse 39, D-4132 Kamp- Lintfort (DE)**

(74) Vertreter: **Wolff, Michael, Dipl.- Phys., Kirchheimer Strasse 69, D-7000 Stuttgart 75 (DE)**

EP 0 191 919 B1

## Beschreibung

Die Erfindung betrifft eine Dichtungsanordnung für hydraulische Grubenstempel und dergleichen mit mindestens einem doppelt-wirkenden Zylinder und mit einem Kolben, der in einem Zylinder axial geführt ist, welcher gegebenenfalls seinerseits in einem weiteren Zylinder axial geführt ist, wobei entweder der Kolben und jeder radial innere Zylinder oder jeder Zylinder einen radial nach außen bzw. innen offenen Einbauraum für Dichtungselemente, in Form einer im Profil rechteckigen Ringnut aufweist; mit einem wenigstens zwei ringförmige Dichtflächen radial exponierenden Dichtring, der sich am Nutgrund radial und auf der Niederdruckseite axial abstützt, und mit zwei auf der Nieder- bzw. Hochdruckseite des Dichtringes angeordneten Backringen, von denen der niederdruckseitige in einer rechtwinkligen Eckaussparung des Dichtringes sitzt.

Für die bekannten Grubenstempel, die gegebenenfalls teleskopartig ausgebildet sind, werden sogenannte Kompaktdichtungen verwendet (siehe das PDF-Katalog "Präzision-Dichtungen für den Bergbau", Seite 9, herausgegeben im April 1984 von der Anmelderin); das sind symetrisch profilierte Dichtringe mit zwei seitlichen Dichtflächen und einer mittleren Dichtfläche, die zwei axial zwischen den seitlichen Dichtflächen angeordnete, als Schmiertaschen zur Aufnahme von Fett dienende Ringnuten voneinander trennt. Im Bereich der drei dynamischen Dichtflächen und der beiden Schmiertaschen enthält der Gummiwerkstoff des Dichtringes zwecks Stabilisierung und Verschleißminderung ein Textilgewebe. Die bekannten Grubenstempel weisen eine Dichtungsanordnung der eingangs genannten Art auf, wobei die beiden Backringe ein gleiches rechteckiges Profil besitzen und symetrisch auf beiden Seiten der Kompaktdichtung angeordnet sind, sodaß auch der Backring auf der Hochdruckseite in einer rechtwinkligen Eckaussparung des Dichtringes sitzt.

An der bekannten Dichtungsanordnung ist nachteilig, daß der beschriebene kompakte Dichtring mit bis auf 1500 bar anwachsendem Betriebsdruck des hydraulischen Mediums (meistens Öl - in -Wasser-Emulsionen) zunehmend an Dichtwirkung verliert, weil der hohe Betriebsdruck alle Stahlrohre weitet, aus denen die Zylinder der Grubenstempel gefertigt sind.

Der Erfindung liegt daher die Aufgabe zugrunde, eine diesen Nachteil vermeidende Dichtungsanordnung zu schaffen, welche auch bei einem prüfdruck von 2000 bar noch einwandfrei dichtet, wenn der den Dichtring aufnehmende bzw. berührende Zylinder in Abhängigkeit vom Druck elastisch aufgeweitet ist.

Diese Aufgabe ist bei einer Dichtungsanordnung der eingangs genannten Art erfindungsgemäß dadurch gelöst, daß die hochdruckseitige Dichtfläche des Dichtringes durch eine radial bewegliche Dichtlippe gebildet ist, die mittels einer ungefähr V-förmig profilierten, sich hochdruckseitig öffnenden Ringnut von einer Haftlippe getrennt ist, die am Grund der den Einbauraum bildenden Ringnut anliegt; und daß der hochdruckseitige Backring einen axialen Vorsprung in die lippentrennende Ringnut aufweist, welcher als Stützring für die mit Niederdruck beaufschlagte Dichtlippe vorgesehen ist.

Dadurch wird vorteilhafterweise erreicht, daß die an der beweglichen Dichtlippe vorhandene hochdruckseitige Dichtfläche bei dem Versuch der radialen Trennung der Dichtfläche von der Gegenfläche des Kolbens bzw. Zylinders dieser Gegenfläche folgt und das auch in umgekehrter Richtung, wenn der geweitete Zylinder bei sinkendem Betriebsdruck sich seiner Gestalt im drucklosen Zustand annähert. Daher kann das bisherige Unter- bzw. Übermaß der im Rahmen der Materialelastizität beweglichen Dichtflächen kleiner, als es bisher möglich war, gehalten werden, sodaß die Montage der Grubenstempel mit einer erfindungsgemäßen Dichtungsanordnung weniger hohe Axialkräfte auf Kolben und Zylinder erfordert als bisher. Trotz der hohen radialen Vorspannungen, mit denen die bekannten Kompaktdichtungen in Grubenstempel eingebaut wurden, deren Montage dadurch erschwert wurde, ließen sich die Zylinderverformung unter höchstem Betriebsdruck ausgleichende Vorspannungen in diesen Kompaktdichtungen nicht erreichen. Bei der erfindungsgemäßen Dichtungsanordnung wird auf hinreichend große radiale Vorspannungen des Dichtringes verzichtet und die Beweglichkeit der dynamischen Dichtlippe sowie deren lageunabhängige Dichtwirkung in einem großen Druckbereich ausgenutzt.

Bei einer bevorzugten Ausführungsform der erfindungsgemäßen Dichtungsanordnung weist die Dichtlippe eine Dichtkante und zwei an diese anschließende Flanken auf, von denen die der Hochdruckseite zugewandte steiler gegen die Anordnungsachse geneigt ist als die der Niederdruckseite zugewandte flachere Flanke, an sie sich ein angenähert zylindrischer Abschnitt des Dichtringes anschließt, an welchem mindestens ein Dichtwulst mit je einer der Dichtflächen ausgeformt ist. Diese Profilierung des Dichtringes hat den Vorteil, daß der beim Vorhub auftretende Hochdruck die Wirkung der dynamischen Dichtlippe und des niederdruckseitigen Backringes verstärkt und daß der beim Rückhub auftretende Niederdruck diese Dichtlippe ohne großen Widerstand gegen den Stützring des hochdruckseitigen Backringes verdrängen kann.

Bei der bevorzugten Ausführungsform weist der hochdruckseitige Backring ein im wesentlichen L-förmiges Profil mit einem radialen Schenkel und einem axialen Schenkel auf, welcher parallel zur Haftlippe in die lippentrennende Ringnut eingreift und mit der Nutflanke der Dichtlippe einen spitzen Winkel bildet, der sich hochdruckseitig öffnet. Der radiale Profilschenkel gehört dem eigentlichen Backring an, der den Spalt zwischen Kolben und Zylinder bzw. Zylinder und Zylinder schließt, sich aber nicht bis zum Nutgrund des Einbauraumes erstreckt, um die Wirkung der Haftlippe des Dichtringes nicht zu beeinträchtigen. Der axiale Profilschenkel gehört dem Stützring für die Dichtlippe an, die durch diesen axialen Vorsprung des hochdruckseitigen Backringes davor bewahrt wird, unter Hochdruckeinfluß die lippentrennende Ringnut des Dichtringes zu schließen und sich dabei an die Haftlippe anzulegen. In einem solchen Falle wäre die dynamische Dichtwirkung der Dichtlippe aufgehoben und die Wirkung des niederdruckseitigen Backringes geschmälert, der den erwähnten Spalt zu schließen hat, um eine Spalteinwanderung des Dichtringes zur Niederdruckseite hin zu verhindern.

Bei der bevorzugten Ausführungsform sind zwischen der niederdruckseitigen Nutwandung des Einbauraumes einerseits sowie dem Dichtring und dem in ihm gelagerten niederdruckseitigen Backring andererseits zwei einen rechteckig profilierten Doppelring bildende Keilringe mit dreieckigem Profil derart angeordnet, daß ein Keilring sowohl an der niederdruckseitigen Nutwandung des Einbauraumes als auch an dessen Nutgrund anliegt. Mittels dieser beiden Keilringe, deren aneinanderliegende, im Profil diagonale Gleitflächen zweckmäßig orientiert sind, kann bei sehr hohen Betriebsdrücken dafür gesorgt werden, daß im Falle des Vorhubes der durch den niederdruckseitigen Backring noch nicht ganz geschlossene Spalt im axialen Bereich des Doppelringes völlig zum Verschwinden gebracht wird, um zu gewährleisten, daß der Dichtring nicht zur Niederdruckseite hin in den Spalt extrudiert wird. Diese Gefahr besteht zur Hochdruckseite hin nur in sehr viel geringerem Maße, sodaß der hochdruckseitige Backring keine Unterstützung durch einen entsprechenden Doppelring benötigt.

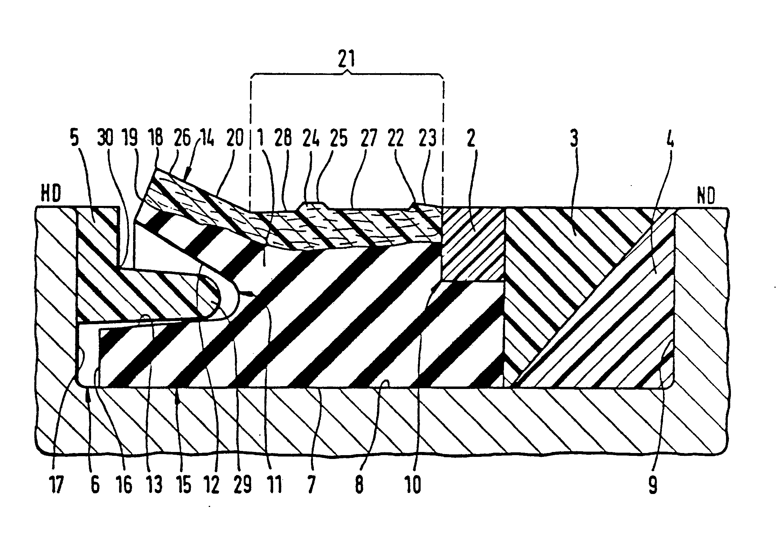

Im folgenden ist die Erfindung anhand der durch die Zeichnung beispielhaft dargestellten bevorzugten Ausführungsform der erfindungsgemäßen Dichtungsanordnung im einzelnen erläutert.

Die einzige Figur der Zeichnung zeigt einen axialen Längsschnitt der Ausführungsform.

Im Ausführungsbeispiel besteht die erfindungsgemäße Dichtungsanordnung für einen im übrigen nicht dargestellten hydraulischen Grubenstempel aus einem Dichtring 1, aus einem niederdruckseitigen Backring 2, aus zwei niederdruckseitigen Keilringen 3 und 4, aus einem hochdruckseitigen Backring 5 und aus einem radial offenen Einbauraum in Form einer im Profil rechteckigen Ringnut 6 in dem Kolben oder in einem Zylinder des Grubenstempels.

Der Dichtring 1 liegt mit einer kreiszylindrischen Ringfläche 7 am kreiszylindrischen Grund 8 der Ringnut 6 an und kehrt seine rechtwinklig gestufte Niederdruckseite ND der niederdruckseitigen Nutwandung 9 des Einbauraumes zu, wobei zwischen beiden ein axialer Abstand besteht, welcher der axialen Breite des aus den beiden Keilringen 3 und 4 gebildeten Doppelringes entspricht. In seiner nicht am Nutgrund 8 anliegenden niederdruckseitigen Ecke weist der Dichtring 1 eine rechtwinklige, umlaufende Eckaussparung 10 auf, die der Backring 2 völlig ausfüllt. Auf seiner Hochdruckseite HD ist der Dichtring 1 mit einer V-förmig profilierten Ringnut 11 mit ausgerundetem Grund versehen, an den sich die konischen Nutflanken 12 und 13 einer Dichtlippe 14 bzw. einer Haftlippe 15 derart anschließen, daß sich die Ringnut 11 gegen die Hochdruckseite öffnet. Dabei ist die Nutflanke 12 der unbelasteten Dichtlippe 14 ungefähr + 45° gegen die Ringfläche 7 geneigt, mit der die Nutflanke 13 der Haftlippe 15 einen geringen Minuswinkel einschließt. Die Haftlippe 15 hält mit ihrer kreisringförmigen Stirnfläche 16 unter Hochdruckeinfluß einen gewissen Abstand zur hochdruckseitigen Nutwandung 17 und steht dabei axial zur Hochdruckseite hin über die Dichtlippe 14 hinaus, die eine rechtwinklige Dichtkante 18 und zwei an diese anschließende, ungefähr senkrechte Flanken 19 und 20 aufweist, von denen die der Hochdruckseite zugewandte Flanke 19 steiler gegen die parallel zur geraden Profillinie der Ringfläche 7 verlaufende Anordnungsachse geneigt ist als die der Niederdruckseite zugewandte flachere Flanke 20, an die sich ein bis zur Eckaussparung 10 reichender, angenähert zylindrischer Oberflächen-Abschnitt 21 des Dichtringes 1 anschließt, an welchem ein der Eckaussparung benachbarter, sägezahnförmig profilierter Dichtwulst 22 mit einer der Niederdruckseite schwach zugeneigten konischen Dichtfläche 23 und ein mittiger Dichtwulst 24 mit einer kreiszylindrischen Dichtfläche 25 ausgeformt sind. Die beiden Dichtflächen 23 und 25 werden durch die der Haftlippe 15 abgewandte Dichtfläche 26 der Dichtlippe 14 an deren scharfer Dichtkante 18 und Flanke 20 ergänzt. Diese Dichtfläche 26 wandert je nach radialer Belastung der beweglichen Dichtlippe 14 über deren Oberfläche. Zwischen dem mittleren Dichtwulst 24 einerseits und dem seitlichen Dichtwulst 22 bzw. der Erhebung der längeren Flanke 20 der Dichtlippe 14 andererseits befindet sich je eine Schmiertasche 27 bzw. 28, in die Fett eingelagert wird. Die radiale Erhebung der Dichtflächen 23 und 25 über den Grund der Schmiertaschen 27 und 28 ist wesentlich kleiner als die Erhebung der Dichtkante 18. Der mit der Länge der Flanke 19 übereinstimmende senkrechte Abstand der ungefähr parallelen Nutflanke 12 und Lippenflanke ist ungefähr halb so groß wie die Länge der Flanke 20, sodaß die Dichtlippe 14 ein etwa rechteckiges Profil mit dem Seitenlängenverhältnis 1 : 2 aufweist, während dieses Verhältnis bei der Haftlippe 15 1 : 3 beträgt.

Der niederdruckseitige Backring 2 weist ein nahezu quadratisches rechteckiges Profil auf, das dem Profil der Eckaussparung 10 des Dichtringes 1 angepaßt ist.

Die beiden Keilringe 3 und 4 weisen ein gleiches gleichschenklig-dreieckiges Profil auf. Der hochdruckseitige Heilring 3 liegt an der Niederdruckseite des Dichtringes 1 und am Backring 2 sowie am niederdruckseitigen Keilring 4 an, der seinerseits an der niederdruckseitigen Nutwandung 9 des Einbauraumes und an dessen Ringfläche 7 anliegt.

Der hochdruckseitige Backring 5 weist ein im wesentlichen L-förmiges Profil mit einem axialen Schenkel, der einem als Stützring 29 vorgesehenen axialen Vorsprung in die lippentrennende Ringnut 11 angehört, und einen radialen Schenkel auf, der sich nicht in den Raum zwischen der Stirnfläche 16 der Haftlippe 15 und der hochdruckseitigen Nutwandung 17 des Einbauraumes hineinerstreckt, sondern mit rechteckigem Profil an einem Teil der Flanke 19 der Dichtlippe 14 vorbei, ohne diese zu berühren, bis zum abzudichtenden Spalt. Der axiale Profilschenkel des Backringes 5 ist ein zur Niederdruckseite hin schwach konvergierendes Halboval. Der so profilierte Stützring 29 erstreckt sich nicht bis zum Grund der lippentrennenden Ringnut 11, liegt der Haftlippe 15 aber nahe und schließt mit der unbelasteten Dichtlippe 14 einen sich zur Hochdruckseite hin öffnenden spitzen Winkel von ungefähr 45° ein, der wie gesagt auch zwischen den Nutflanken 12 und 13 besteht. Dabei sind der Grund der Ringnut 11 und das niederdruckseitige freie Ende des Stützringes 29 ungefähr halbkreisförmig komplementär profiliert. Außerdem paßt die radial gegen den Grund der Ringnut 6 verdrängte Dichtlippe 14 in die Ausnehmung 30 des Backringes 5.

**Patentansprüche**

1. Dichtungsanordnung für hydraulische Grubenstempel und dergleichen mit mindestens einem doppeltwirkenden Zylinder und mit einem Kolben, der in einem Zylinder axial geführt ist, welcher gegebenenfalls seinerseits in einen weiteren Zylinder axial geführt ist, wobei entweder der Kolben und jeder radial innere Zylinder oder jeder Zylinder einen radial nach außen bzw. innen offenen Einbauraum für Dichtungselemente (1 bis 5) in Form einer im Profil rechteckigen Ringnut (6) aufweist; mit einem wenigstens zwei ringförmige Dichtflächen (23, 25, 26) radial exponierenden Dichtring (1), der sich am Nutgrund (7) radial und auf der Niederdruckseite (ND) axial abstützt, und mit zwei auf der Nieder- bzw. Hochdruckseite (HD) des Dichtringes (1) angeordneten Backringen (2, 5), von denen der niederdruckseitige (2) in einer rechtwinkligen Eckaussparung (10) des Dichtungsringes (1) sitzt, dadurch gekennzeichnet, daß die hochdruckseitige Dichtfläche (26) des Dichtringes (1) durch eine radial bewegliche Dichtlippe (14) gebildet ist, die mittels einer ungefähr V-förmig profilierten, sich hochdruckseitig öffnenden Ringnut (11) von einer Haftlippe (15) getrennt ist, die an Grund (7) der den Einbauraum bildenden Ringnut (6) anliegt; und daß der hochdruckseitige Backring (5) einen axialen Vorsprung in die lippentrennende Ringnut (11) aufweist, welcher als Stützring (29) für die mit Niederdruck (ND) beaufschlagte Dichtlippe (14) vorgesehen ist.

2. Dichtungsanordnung nach Anspruch 1, dadurch gekennzeichnet, daß die Dichtlippe (14) eine Dichtkante (18) und zwei an diese anschließende Flanken (19, 20) aufweist, von den die der Hochdruckseite (HD) zugewandte (19) steiler gegen die Anordnungsachse geneigt ist als die der Niederdruckseite (ND) zugewandte flachere Flanke (20), an die sich ein angenähert zylindrischer Oberflächen-Abschnitt (21) des Dichtringes (1) anschließt, an welchem mindestens ein Dichtwust (22, 24) mit je einer der Dichtflächen (23, 25) ausgeformt ist.

3. Dichtungsanordnung nach Anspruch 1 oder 2, dadurch gekennzeichnet, daß der hochdruckseitige Backring (5) ein im wesentlichen L-förmiges Profil mit einem radialen Schenkel und einem axialen Schenkel (29) aufweist, welcher parallel zur Haftlippe (15) in die lippentrennende Ringnut (11) eingreift und mit der Nutflanke (12) der Dichtlippe (14) einen spitzen Winkel bildet, der sich hochdruckseitig öffnet.

4. Dichtungsanordnung nach einem dieser Ansprüche 1 bis 3, dadurch gekennzeichnet, daß zwischen der niederdruckseitigen Nutwandung (9) des Einbauraumes (6) einerseits sowie dem Dichtring (1) und dem in ihm gelagerten niederdruckseitigen Backring (2) andererseits zwei einen rechteckig profilierten Doppelring bildende Keilringe (3, 4) mit dreieckigem Profil derart angeordnet sind, daß ein Keilring (4) sowohl an der niederdruckseitigen Nutwandung (9) des Einbauraumes (6) als auch an dessen Nutgrund (7) anliegt.

**Claims**

1. Sealing arrangement for hydraulic pit props and the like comprising at least one double action cylinder and a piston axially guided in a cylinder which may in turn be axially guided in a wider cylinder, either the piston and each radially inner cylinder or each cylinder having a recess in the form of an annular groove (6) which is rectangular in section and open to the radially outer and inner side, respectively, for accommodating sealing elements (1 to 5); a sealing ring (1) which bears in the radial direction against the base (7) of the aforesaid recess and in the axial direction against the low pressure end (ND) and has at least two annular sealing surfaces (23, 25, 26) exposed on the radial side, and further comprising two backing rings (2, 5) arranged at the low pressure end (ND) and the high pressure end (HD), respectively, of the sealing ring (1), that backing ring which is situated at the low pressure end (2) being seated in a rectangular corner recess (10) of the sealing ring (1), <u>characterised</u> in that that sealing surface (26) of the sealing ring (1) which is situated at the high pressure end is formed by a radially movable sealing lip (14) which is separated from a seated lip (15) by means of an annular groove (11) which is approximately V-shaped in section and open to the high pressure end, which lip (15) lies in contact with the base (7) of the annular groove (6) in which the parts are installed; and in that the backing ring (5) situated at the high pressure end has an axial projection extending into the annular groove (11) which separates the lips, said projection serving as supporting ring (29) for the sealing lip (14) which is subjected to low pressure (ND).

2. Sealing arrangement according to claim 1, characterised in that the sealing lip (14) has a sealing edge (18) and adjacent thereto two sides (19, 20), of which that side (19) which faces the high pressure end (HD) is more steeply inclined to the axis of the arrangement than the flatter side (20) which faces the low pressure end (ND) and which is continuous with an approximately cylindrical surface section (21) of the sealing ring (1), on which surface section is formed one or more than one sealing ridge (22, 24), each ridge comprising one of the sealing surfaces (23, 25).

3. Sealing arrangement according to claim 1 or claim 2, characterized in that the backing ring (5) situated at the high pressure end is substantially L-shaped in section, comprising a radial arm and an axial arm (29), the latter extending into the lips-separating annular groove (11) in a direction parallel to the seated lip (15) and forming an acute angle which opens to the high pressure end, with that side (12) of the groove (11) which belongs to the sealing lip (14).

4. Sealing arrangement according to one of the claims 1 to 3, characterised in that two tapered rings (3, 4) each triangular in section and together forming a double ring of rectangular section are arranged between, on the one hand, the wall (9) at the low pressure end of the groove forming the assembly recess (6) and, on the other hand, the sealing ring (1) and the backing ring (2) which is mounted therein at the low pressure end, so that one tapered ring (4) bears both against the wall (9) at the low pressure end of the groove forming the assembly recess (6) and against the base (7) of the groove.

**Revendications**

1. Assemblage d'étanchéité pour des étançons de mines hydrauliques et similaires, avec au moins un cylindre à double effet et avec un piston guidé axialement dans un cylindre lequel est éventuellement guidé à son tour axialement dans un cylindre plus large, le piston et chaque cylindre radialement intérieur ou chaque cylindre présentant un logement pour des éléments d'étanchéité (1 à 5), ouvert radialement vers l'extérieur et respectivement vers l'intérieur, sous la forme d'une rainure annulaire (6) à profil rectangulaire; avec un joint d'étanchéité (1) qui présente aux moins deux surfaces d'étanchéité annulaires (23, 25, 26) exposées dans le sens radial et s'appuie radialement au fond de la rainure (7) et axialement du côté basse pression (ND); et avec deux bagues d'appui (2, 5) disposées du côté basse pression et respectivement du côté haute pression (HD) du joint d'étanchéité (1), dont celle placée du côté basse pression (2) est montée dans un évidement d'angle rectangulaire (10) du joint d'étanchéité (1), <u>caractérisé en ce</u> que la surface d'étanchéité (26), du côté haute pression, du joint d'étanchéité (1) est constituée par une lèvre d'étanchéité (14) mobile dans le sens radial laquelle est séparée, au moyen d'une rainure annulaire (11) présentant un profil approximativement en forme de V et s'ouvrant du côté haute pression, d'une lèvre d'adhérence (15) appliquée contre le fond (7) de la rainure annulaire (6) formant le logement du joint; et que la bague d'appui (5) du côté haute pression présente une saillie axiale orientée vers l'intérieur de la rainure annulaire (11) de séparation des lèvres, qui est prévue comme bague de support (29) pour la lèvre d'étanchéité (14) soumise à la basse pression (ND).

2. Assemblage d'étanchéité selon la revendication 1, caractérisé en ce que la lèvre d'étanchéité (14) comporte une arête d'étanchéité (18) et deux flancs (19, 20) qui y font suite, dont l'un (19), dirigé du côté haute pression (HD), est incliné plus fortement par rapport à l'axe de l'assemblage que le flanc plus plat (20) dirigé du côté basse pression (ND) auquel fait suite une section de surface (21) sensiblement cylindrique du joint d'étanchéité (1) qui est pourvue d'au moins un bourrelet d'étanchéité (22, 24) avec respectivement l'une des surfaces d'étanchéité (23, 25).

3. Assemblage d'étanchéité selon l'une des revendications 1 ou 2, caractérisé en ce que la bague d'appui (5) du côté haute pression présente un profil sensiblement en forme de L avec une branche radiale et une branche axiale (29) laquelle s'engage, parallèlement à la lèvre d'adhérence (15), dans la rainure annulaire (11) de séparation des lèvres et qui forme avec le flanc (12) de la rainure de la lèvre d'étanchéité (14) un angle obtus lequel s'ouvre du côté haute pression.

4. Assemblage d'étanchéité selon l'une quelconque des revendications 1 à 3, caractérisé en ce que deux bagues coniques (3, 4) à profil triangulaire qui forment une bague double à profil rectangulaire sont disposées entre la paroi de rainure (9) du logement (6) du côté basse pression, d'une part, et le joint d'étanchéité (1) et la bague d'appui (2) du côté basse pression montée dans celui-ci, d'autre part, de telle façon qu'une bague conique (4) est appliquée aussi bien contre la paroi de rainure (9) du logement (6) du côté basse pression que contre le fond de rainure (7) de celui-ci.